# FASCICULE DE BREVET EUROPEEN

(11) **EP 2 552 622 B1**
(45) Date de publication et mention de la délivrance du brevet: **23.07.2014**
(21) Numéro de dépôt: 11712952.8
(22) Date de dépôt: 02.03.2011
(51) Int. Cl.: B21J 15/04, B21J 15/36, F16B 19/10

(54) **ORGANE DE RIVETAGE ET OUTIL DE POSE ADAPTÉ**
NIET UND NIETSETZVORRICHTUNG
RIVET AND RIVETING TOOL

(30) Priorité: 26.03.2010 FR 1052214
(43) Date de publication de la demande: 06.02.2013
(73) Titulaire: Eris, 31130 Flourens (FR)
(72) Inventeur: AURIOL, Jean-Marc, F-31130 Flourens (FR)
(74) Mandataire: Richebourg, Michel François
(86) Numéro de dépôt international: PCT/FR2011/050434
(87) Numéro de publication internationale: WO 2011/117502

(56) Documents cités:
- FR-A- 1 499 495
- FR-A1- 2 929 666
- US-A- 2 451 356
- US-A- 3 042 961
- US-A- 3 526 955

## Description

### DOMAINE D'APPLICATION DE L'INVENTION

La présente invention a trait au domaine des rivets et notamment aux adaptations permettant leur utilisation pour la fixation des matériaux composites.

### DESCRIPTION DE L'ART ANTÉRIEUR

La fixation des matériaux composites au moyen de rivets présente diverses contraintes, parmi celles-ci :
- une bonne résistance en fatigue des assemblages doit être garantie,
- l'endommagement du matériau composite lors de la pose du rivet doit être évité,
- le phénomène de délaminage doit être évité,
- la résistance en cisaillement doit être optimisée,
- la tenue à l'arrachement en traction doit être optimisée,
- la pose ne doit pas nécessiter de fraisure du côté de la rivure,
- une pose correspondant à celle des rivets pleins actuels (par écrasement) doit pouvoir être réalisée afin d'exploiter les machines à riveter classiques,
- le coût doit être amélioré,
- etc...

Les rivets pleins bien que peu onéreux ne sont pas adaptés à la fixation de pièces en matériaux composites. En effet, lors de son écrasement, la matière du rivet vient s'appuyer sur le coin ou rebord du trou pour former le bulbe (appelé également rivure). Cet appui est particulièrement élevé en termes d'effort et a pour conséquence de voir apparaître le phénomène de délaminage du fait du haut niveau de contraintes radiales localisées dans le rebord du trou.

Les rivets semi-tubulaires proposent une création de bulbe nécessitant moins d'effort pour former la rivure que pour un rivet plein mais ne proposent pas une tenue à la fatigue équivalente à celle d'un rivet plein.

Enfin, les rivets aveugles de fixation de structure prévoyant un sertissage permettent d'atteindre la plupart des objectifs visés mais à un coût particulièrement important aussi bien en fabrication qu'en outillage de pose.

L'organe de jonction décrit par le document FR 1499495, sur lequel se base le préambule de la revendication 1, est en matière plastique avec partie mâle et partie femelle du type bouton pression. Plus précisément, l'organe décrit comprend deux éléments s'insérant l'un dans l'autre, l'insertion de la partie mâle semi tubulaire assurant l'expansion à des fins de retenue d'une extrémité de la partie femelle.

Le document FR2929666 décrit un organe de rivetage de pièces en matériaux composites dans lesquels a été réalisé un trou traversant, qui se compose d'une part d'une douille creuse comprenant à une extrémité une tête venant en appui sur la surface d'une des pièces à assembler et une tige creuse, et d'un insert susceptible d'être inséré dans la partie creuse de la douille, une bouterolle assurant une pression sur l'insert puis sur la douille de sorte que l'insert occupe le volume évidé de la tige de la douille et que l'extrémité cette dernière se déforme à des fins de création d'un bulbe d'appui.

Le document US 3,526,955, décrit quant à lui un procédé d'installation d'un élément de fixation de type oeillet qui propose une bouterolle qui va déformer ou contrôler la déformation d'une pièce indépendante formant projection tubulaire associée à une tête.

Cet élément de fixation n'est pas un rivet et ne comprend pas
- un corps composé d'une tête et d'une tige tubulaire ni
- un insert.

Il ne propose donc pas les caractéristiques recherchées.

### DESCRIPTION DE L'INVENTION

Partant du cahier des charges préétabli par les contraintes définies pour une fixation dans des matériaux composites, la demanderesse a mené des recherches qui ont abouti à la conception d'un organe de rivetage particulièrement avantageux.

Selon l'invention, l'organe de rivetage de pièces en matériaux composites dans lesquels a été réalisé un trou traversant est remarquable en ce qu'il se compose d'une part
- d'une douille creuse comprenant à une extrémité une tête venant en appui sur la surface d'une des pièces à assembler et une tige creuse, et
   d'autre part
- d'un insert semi-tubulaire comprenant une première extrémité susceptible d'être insérée dans la partie creuse de la douille et une extrémité ouverte susceptible de se déformer à des fins de formation d'un bulbe d'appui sur la surface de l'autre pièce à assembler une fois l'insert bloqué en translation dans la douille.

Cette caractéristique est particulièrement avantageuse en ce qu'elle réunit les avantages des rivets pleins aux rivets semi-tubulaires sans en grever le coût.

Ainsi, le gonflement de la douille à l'intérieur du trou ainsi que son remplissage par l'insert va permettre de garantir la tenue en fatigue ainsi qu'une bonne tenue en cisaillement. En outre, le pliage de l'extrémité tubulaire de l'insert pour former le bulbe va permettre la création dudit bulbe sans grand effort. Ce bulbe ne va pas endommager le matériau composite des éléments à assembler du fait qu'il est formé par l'insert et qu'en conséquence, les parois du trou sont protégées par la douille qui reçoit ledit insert.

Cet organe de rivetage est particulièrement avantageux en ce que c'est la déformation de l'insert qui permet d'obtenir le bulbe alors que le corps de la douille qui reste intact protège les pièces en matériaux composite de toute contrainte. Ainsi, l'insert présente une extrémité pleine et une extrémité évidée :
- l'extrémité pleine présente deux sections permettant leur insertion dans l'âme creuse de la douille et proposant un épaulement venant en appui sur la surface d'appui ménagée dans la douille,
- l'extrémité évidée présente une section extérieure et une section creuse sensiblement tronconique qui va former le bulbe d'appui sur le deuxième pièce.

La partie pleine de l'insert va rentrer en force dans la douille à des fins de gonflement de la fixation à l'intérieur du trou pour assurer notamment une bonne conductivité électrique. Néanmoins, cette déformation du corps est très faible afin d'éviter tout phénomène de délaminage. En définissant les diamètres des parties creuses et des parties pleines, le gonflement de l'organe de rivetage est parfaitement maîtrisé.

Selon une autre caractéristique particulièrement avantageuse, la douille comprend un évidement la traversant axialement de part en part et présentant des sections différentes. La tête de la douille présente un alésage dans lequel, l'extrémité de l'insert présentant une projection à cet effet, vient s'insérer et se fixer une fois la translation terminée et le bulbe formé. Dans ce cas, l'évidement ménagé dans la douille se prolonge dans la tête afin que l'extrémité de l'insert puisse être sertie dans ladite tête pour optimiser le verrouillage.

Plus précisément selon une autre caractéristique, la douille présente en entrée de l'extrémité tubulaire de son corps une section tronconique se rétrécissant sur une section sensiblement cylindrique laquelle se prolonge en une section tronconique ménagée dans la tête et qui, de plus petit diamètre par rapport à la section cylindrique de façon à proposer un appui axial à l'insert, s'évase en débouchant de ladite tête.

Le matériau de l'insert et de la douille peut être sélectionné parmi la liste suivante :
- aluminium et alliages d'aluminium,
- titane et alliages de titane,
- inox et alliages réfractaires
- acier, fer et alliages d'acier,
- cuivre et alliages cuivreux.

La douille peut adopter les mêmes matériaux que ceux de l'insert ou être réalisée dans un matériau différent. Cette douille se déforme très peu lors de la pose de la fixation. Aussi, la demanderesse s'oriente vers une combinaison titane/titane et selon un mode de réalisation préféré mais non limitatif vers une combinaison de matériaux où la douille est réalisée en titane TA6V et l'insert en titane T40.

L'organe de rivetage de l'invention présentera ainsi une résistance au cisaillement améliorée.

Le procédé de pose d'un tel organe de rivetage avec
- l'insert pré-engagé dans la douille,
- un trou traversant les matériaux à assembler étant réalisé,
- la douille étant introduite et maintenue dans le trou avec sa tête en appui sur les rebords de l'extrémité du trou,
   consiste :
   - à utiliser une douille dont l'âme creuse présente deux sections différentes, une première section démarrant à partir de l'extrémité distale présentant un premier diamètre et une deuxième section démarrant à la fin de la première section et de diamètre inférieur, ladite deuxième section débouchant de la tête,
   - à utiliser un insert ne présentant pas de surface fonctionnelle d'appui axiale à des fins de gonflement radial de la douille dans le trou mais dont le diamètre est apte à permettre son logement en force dans les deux sections,
   - à introduire axialement l'insert dans la douille de sorte que cette dernière gonfle radialement à l'intérieur du trou et que les évidements définis soient occupés par ledit insert,
   - à assurer au moyen d'une bouterolle, une pression à l'extrémité à déformer de l'insert pour en assurer, une fois l'insert bloqué dans la douille, le pliage par extension radiale centrifuge.

De plus, étant donné que le pliage va démarrer après gonflement et que la longueur de la tige de la douille correspond à l'épaisseur de l'assemblage, le pliage de l'insert ne va pas exercer de contrainte directement sur les bords du trou protégés par l'extrémité de la douille. Ainsi, le bord côté rivure du trou traversant les matériaux à assembler est protégé de tout endommagement. Cette protection est optimisée en ce que le bord intérieur de l'extrémité tubulaire de la douille est chanfreinée ce qui permet un début de déformation centrifuge pour l'insert sans que les parois de l'insert ne viennent en contact contre la douille et poussent le volume de cette dernière sur les parois du bord du trou.

Un autre avantage d'une telle configuration réside dans le fait de ne réaliser qu'un trou sans fraisure dans le matériau composite du côté rivure. Le temps et l'outillage d'une telle opération ne sont plus ainsi nécessaires.

Une autre caractéristique participant à la protection de la rivure vient du fait que l'insert ne présente aucune surface axiale ayant pour fonction de déformer la douille ce qui, dans son mouvement axial à l'intérieur de la douille, permet de ne voir apparaître que des déformations radiales. L'insert ne va pas tasser la matière de la douille dans le rebord de la rivure. La réalisation d'un bulbe dans ces bonnes conditions permet d'obtenir une fixation présentant une bonne tenue à l'arrachement. De plus, la configuration d'un tel organe de rivetage permet d'utiliser l'outillage classiquement exploité pour la mise en place d'un rivet plein.

Selon une autre caractéristique particulièrement avantageuse, le procédé consiste à pré-engager l'insert dans l'extrémité distale ouverte de la douille préalablement à l'engagement de l'organe de rivetage dans le trou. Cette caractéristique évite de gérer la manutention de deux pièces et permet d'utiliser l'organe de rivetage de l'invention comme un rivet plein.

Le gonflement partiel ou total de la partie de douille placée à l'intérieur du trou assure un premier serrage du corps de douille à l'intérieur du trou. Pour ce faire, la section de l'extrémité pleine de l'insert venant coopérer avec la section creuse cylindrique de la douille adopte un renflement.

Néanmoins, pour optimiser la fixation, une autre caractéristique du procédé consiste à poursuivre l'effort jusqu'à sertir l'insert dans l'évidement pratiqué dans la tête ce qui contribue à la création d'une fixation de structure avec une tenue à l'arrachement optimisée.

En effet, selon une caractéristique de l'invention, la tête de la douille est également évidée pour accueillir une projection axiale de forme adaptée de l'insert qui permettra son sertissage dans la tête.

Selon une autre caractéristique, l'extrémité de la projection sensiblement cylindrique et axiale de l'insert qui vient se sertir dans la section creuse de la tête de douille présente la forme d'une projection cylindrique coaxiale avec le reste de l'insert et présente un évidement qui va faciliter le sertissage en requérant moins d'effort et en autorisant la déformation de la matière sans son tassement sur les bords du trou.

De même, le sertissage peut être amélioré par l'aménagement extérieur de gorges ou de cannelures sur le corps de l'insert.

Un objet non-revendiqué de l'invention est constitué par l'outillage de pose. En effet, la bouterolle utilisée va assurer la création du bulbe en déformant l'insert et non la douille.

L'outillage de pose comprend une bouterolle mobile qui adopte un profil permettant l'insertion de l'insert puis l'orientation de la déformation de la partie évidée de l'insert, une fois l'insert bloqué en translation dans la douille.

Cette bouterolle adopte sur sa face orientée vers l'insert des formes concentriques en saillie et en retrait, parmi celles-ci :
- une forme centrale en saillie sensiblement tronconique dont le petit diamètre permet son insertion dans la partie creuse de l'insert et dont la paroi oriente la déformation vers l'extérieur,
- une rainure périphérique concentrique au tronc de cône de section sensiblement demi-circulaire qui va orienter la déformation du tronc de cône évidé formé par l'insert de façon centrifuge et en retournant son rebord.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, d'un mode de réalisation d'un organe de rivetage et d'un procédé d'assemblage et conformes à l'invention.

### BRÈVE DESCRIPTION DES DESSINS

La figure 1 est un dessin schématique d'une vue en coupe de la douille et de l'insert pré-assemblés d'un premier mode de réalisation d'un organe de rivetage conforme à l'invention,
Les figures 2, 3, 4 et 5 sont des vues en coupe d'un assemblage illustrant la mise en place de l'organe de rivetage,
La figure 6 est une vue en coupe de l'organe de rivetage une fois mis en place.

### DESCRIPTION DES MODES DE RÉALISATION PRÉFÉRÉS

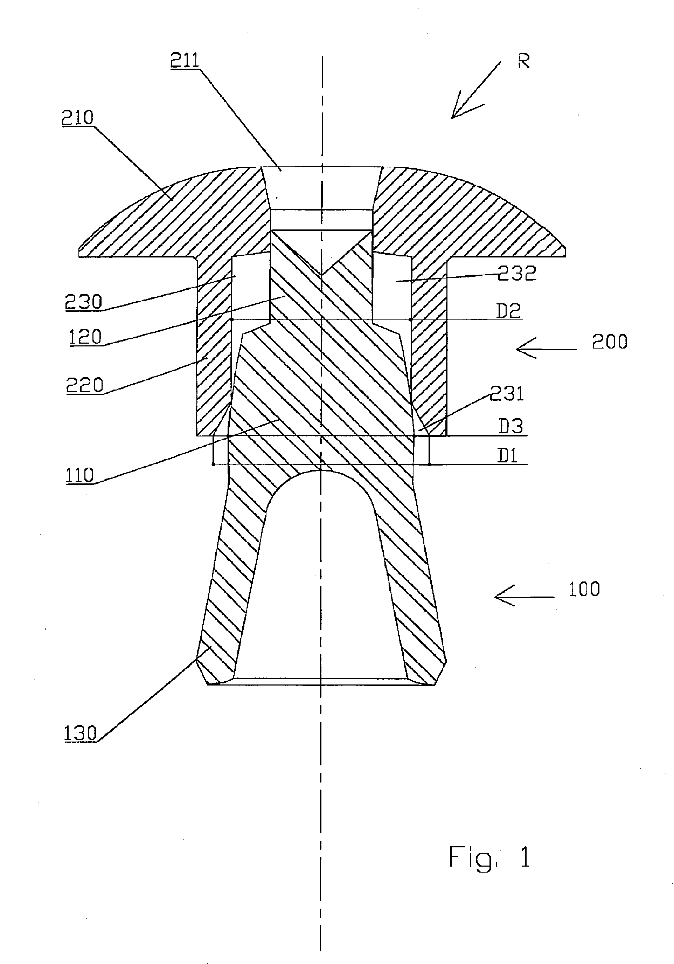

Tel qu'illustré sur le dessin de la figure 1, l'organe de rivetage référencé R dans son ensemble comprend deux parties :
- un insert 100, et
- une douille 200 adaptée pour contenir au moins partiellement l'insert et possédant une extrémité munie d'une tête 210 et une tige 220 comprenant une extrémité tubulaire ouverte pour accueillir l'insert 100. Le diamètre extérieure de la tige autorise son insertion dans un trou T traversant les matériaux M1 et M2 à assembler.

L'âme creuse 230 de la tige 220 présente deux sections différentes 231 et 232 c'est à dire des volumes d'évidements sensiblement cylindriques présentant des diamètres différents, une première section 231 démarrant à partir de l'extrémité tubulaire 220 présentant un profil tronconique d'un premier diamètre D1. Cette première section 231 présente en fait un profil tronconique facilitant le début d'insertion de l'insert. L'âme creuse 230 de la tige 220 présente en outre une deuxième section 232 démarrant à la fin de la première section 231 et de diamètre D2 inférieur.

Ces évidements de diamètres différents viennent en adéquation avec l'insert 100 qui, ne présentant pas de surface fonctionnelle d'appui axial destiné à la déformation de la douille, présente un corps en plusieurs tronçons dont un 110 de diamètre D3 apte à permettre son logement sans déformation dans la première section 231 de l'âme creuse 230 et à permettre son logement en force dans la deuxième section 232 à des fins de gonflement radial de la douille 100. Pour ce faire cette portion d'insert présente un profil sensiblement bombé.

Ainsi, le tronçon 110 de plus grand diamètre D3 de l'insert 100 est inférieur ou légèrement supérieur au diamètre D1 de la première section afin de permettre son accueil sans effort et sans déformation et est plus grand que celui D2 de la deuxième section afin de provoquer la déformation de cette partie de douille 200 qui va se situer à l'intérieur du trou traversant les pièces à assembler. Comme illustrée, la deuxième section évidée de diamètre inférieur s'étend jusqu'au dessous de la tête de la douille.

L'organe de rivetage présente en outre un sertissage entre la douille et l'insert optimisé par un évidement 211 de la tête 210 dans lequel va venir s'introduire une projection cylindrique axiale 120 de l'insert 100 de volume et de diamètre adapté.

Le bulbe est réalisé par l'insert qui comporte une extrémité semi-tubulaire 130 qui, une fois son corps bloqué en translation, va être déformée pour former la deuxième surface d'appui contre les matériaux à assembler.

Cette extrémité creuse 130 présente extérieurement et intérieurement un profil tronconique s'évasant vers l'extérieur.

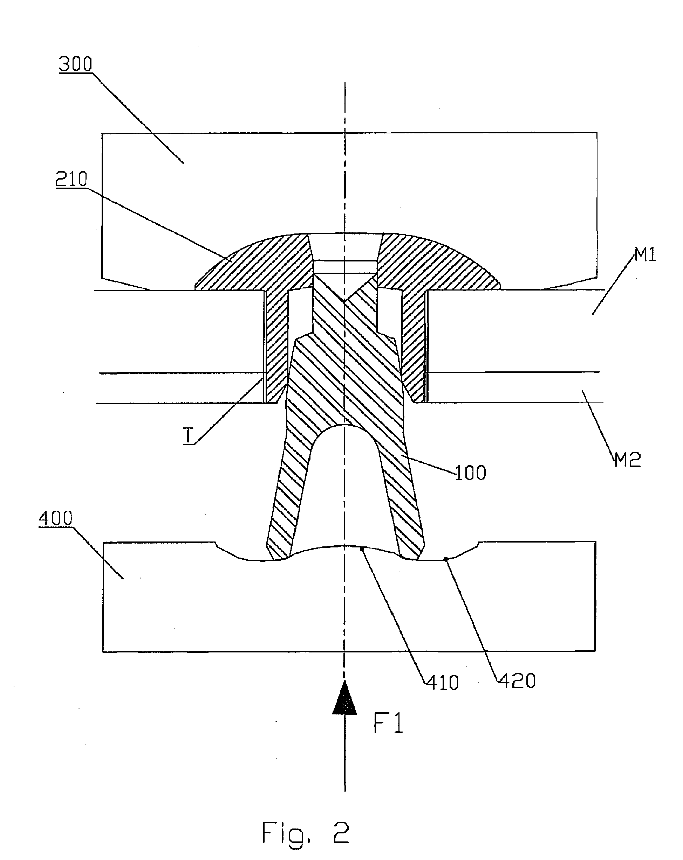

L'organe de rivetage R se présente, comme illustré par les figures 2, 3, 4, 5 et 6, avec l'insert 100 pré-engagé dans la première section 231 de l'âme tubulaire 230 de la tige 220 de la douille 200 afin qu'il puisse être géré comme un rivet plein.

Ce pré-engagement est maintenu par un montage serré léger entre l'insert 100 et la première section 231 ou bien par une déformation de la douille en trois points disposés à 120 degrés à des fins de serrage de l'insert 100.

Comme illustré, l'insert 100 dépasse largement hors de la douille 200 en position pré-engagée. La douille présente quant à elle, une tige 220 d'une longueur correspondant sensiblement à la hauteur du trou T traversant les matériaux M1 et M2 à assembler c'est à dire que son extrémité vient affleurer à l'extrémité du trou.

Les différentes étapes de l'assemblage mis en oeuvre par un tel organe de rivetage R vont maintenant être décrites en regard des dessins des figures 2 à 6.

Comme illustré sur le dessin de la figure 2, l'organe de rivetage R est disposé à l'intérieur d'un trou T traversant deux pièces en matériaux composites M1 et M2 à assembler. La tête 210 de la douille 200 vient en appui sur la surface extérieure de M1 autour du trou T. Le diamètre du trou T est tel que le corps de la douille pénètre avec jeu à l'intérieur. De plus, la portion "pliable" de l'insert dépasse hors du trou T du côté de la pièce M2.

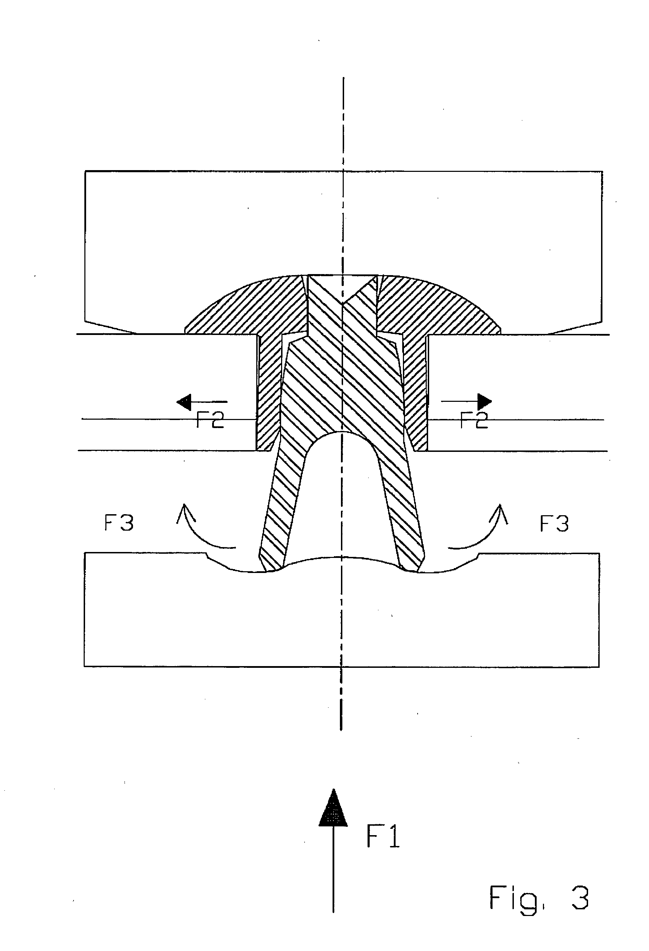

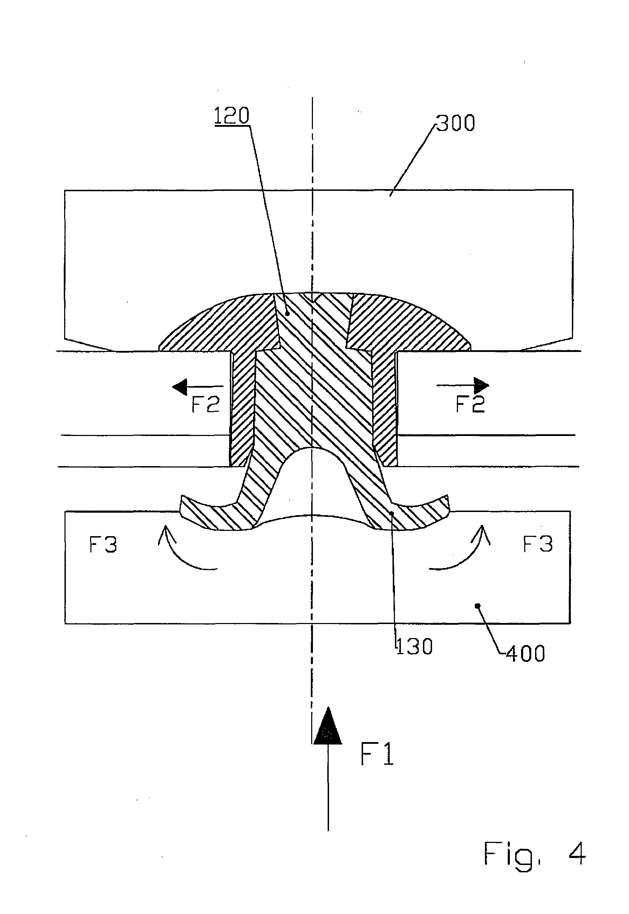

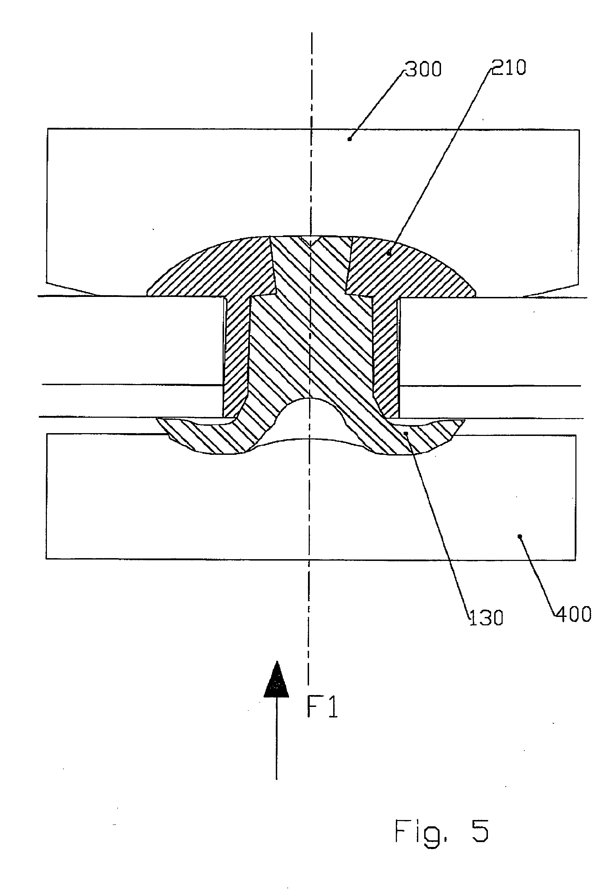

La tête 210 de la douille 200 est maintenue en position au moyen d'une bouterolle 300 fixe et une autre bouterolle 400 mobile selon la flèche F1 est disposée côté rivure et vient en appui contre l'extrémité ouverte 130 de l'insert 100 se projetant hors de la douille 200. Dans un mouvement symbolisé par la flèche F1, la bouterolle mobile 400 va exercer une pression axiale contre l'organe de rivetage R à des fins :
- d'insertion de l'insert 100 (figure 3),
- d'expansion du corps de douille 200 disposé dans le trou T (figure 3),
- de pliage de la portion 130 de l'insert restée à l'extérieur du trou T (figures 4 et 5),
- de sertissage de l'insert dans la tête de douille (figures 4 et 5).

L'outil de pose de l'organe de rivetage de l'invention est remarquable en ce qu'il comprend une bouterolle 400 mobile qui adopte un profil permettant l'orientation de la déformation de la partie évidée 130 de l'insert 100. Cette bouterolle 400 adopte sur sa face orientée vers l'insert 100 des formes concentriques en saillie et en retrait dont :
- une forme centrale 410 en saillie sensiblement tronconique dont le petit diamètre permet son insertion dans la partie creuse 130 de l'insert 100 et dont la paroi oriente la déformation vers l'extérieur,
- une rainure périphérique 420 concentrique au tronc de cône 410 de section sensiblement demi-circulaire qui va orienter la déformation du tronc de cône évidé 130 formé par l'insert 100 dé façon centrifuge et en retournant son rebord.

Comme illustré par les figures 3 à 5, sous l'effet du mouvement de la bouterolle mobile 400 selon la flèche F1, l'insert 100 démarre son insertion en force dans la partie de corps de douille se trouvant dans le trou T. Cette insertion a pour effet un gonflement radial de la douille, selon les flèches F2, qui tend à plaquer les parois extérieures de la douille 200 sur les parois du trou T et à assurer le comblement du jeu existant initialement entre la périphérie extérieure de la douille 200 et la surface intérieure du trou T.

Comme illustré sur la figure 4, l'avancement de l'insert 100 à l'intérieur de la douille 200 aboutit à une mise en butée et à l'arrêt axial dudit insert 100 dont la partie tubulaire 130 va pouvoir être déformée.

Ainsi, au fur et à mesure du gonflement (flèches f2) de la partie intérieure de la douille 200, la partie extérieure 130 de l'insert est soumise à la pression de la bouterolle 400 qui provoque le pliage centrifuge par expansion radiale selon les flèches F3 de la partie extérieure de l'insert 100 (cf. figure 4) une fois l'insert bloqué en translation.

Comme illustré sur le dessin de la figure 4, tout en réalisant, de par ses dimensions adaptées le gonflement de la partie de la douille 200 située à l'intérieur du trou T, l'insert 100 vient occuper la totalité de l'évidement intérieur de cette partie de douille 200 faisant passer ainsi l'organe de rivetage R dans une configuration de type rivet plein. Grâce à cette configuration, la quasi totalité de la surface extérieure de la partie de douille située à l'intérieur du trou T a subi un gonflement dont le retour élastique sera négligeable ce qui permet de maintenir des contraintes radiales à l'intérieur du trou T.

Comme illustrée sur le dessin de la figure 5, la poursuite du mouvement axial de la bouterolle 400 selon la flèche F1 termine le pliage de l'insert 100 pour la création d'un bulbe venant prendre appui sur la pièce M2 autour du trou T.

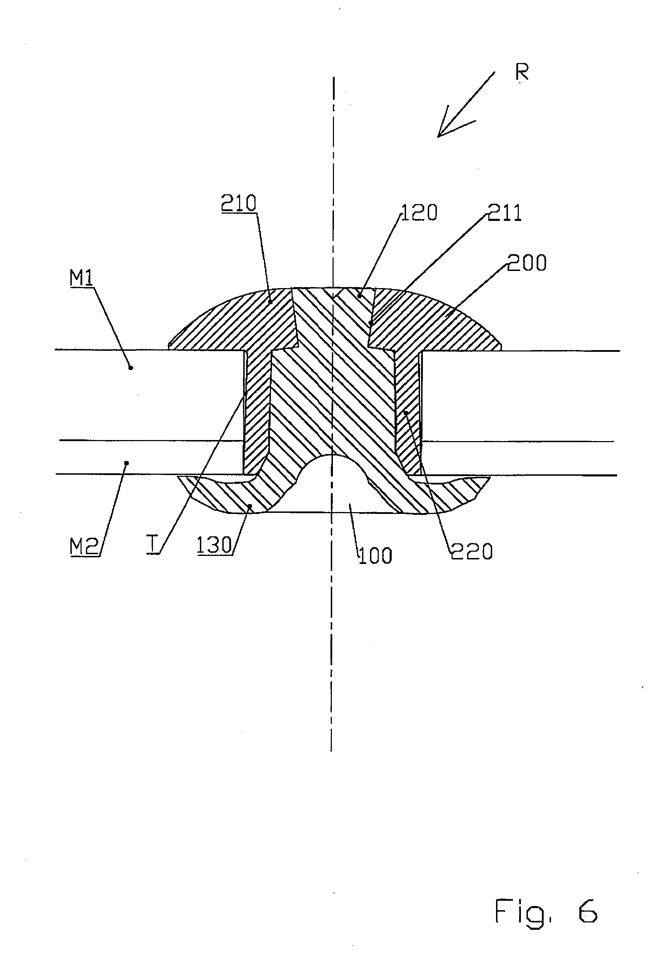

L'assemblage obtenu illustré en figure 6 montre que les bords déformés du bulbe ne viennent pas en appui contre le rebord du trou évitant ainsi tout endommagement. En effet, l'épaisseur de l'extrémité de la douille bien que chanfreinée intérieurement, évite que l'insert ne vienne directement en appui contre le bord du trou.

Les évidements ménagés aux deux extrémités de l'insert permettant une déformation avec moins d'effort.

Comme illustré, l'évidement ménagé dans la douille 200 se prolonge dans la tête 210 avec un évidement 211 s'évasant dans le sens davancée de l'insert afin que l'extrémité de forme adaptée 120 de l'insert 100 puisse être sertie dans ladite tête 210 pour optimiser le verrouillage. Selon le mode de réalisation illustré, la section de l'évidement 211 pratiqué dans la tête 210 est inférieure à la section de plus petit diamètre D2 de l'évidement 230 pratiqué dans la douille.

L'extrémité 120 de l'insert qui vient se sertir dans la tête par le mouvement de translation symbolisé par la flèche F1 présente la forme d'une projection cylindrique coaxiale avec le reste de l'insert et dont l'extrémité libre est elle-même ménagée d'un évidement facilitant sa déformation. Pour l'accueillir, l'évidement 211 pratiqué dans la tête s'évase dans le sens de la progression de l'insert dans la douille pour accueillir le volume de la matière déformée de l'extrémité 140 de l'insert 100 et optimiser ainsi le verrouillage.

On comprend que les procédés et organes de rivetage, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Ainsi par exemple, bien que le mode de réalisation présenté illustre un rivet ménagé d'une tête protubérante, l'organe de rivetage peut être du type de celui comprenant une douille à tête fraisée.

## Revendications

1. Organe de rivetage (R) de pièces en matériaux composites (M1 et M2) dans lesquels a été réalisé un trou traversant, ledit organe se composant d'une part
- d'une douille (200) creuse comprenant à une extrémité une tête (210) venant en appui sur la surface d'une des pièces à assembler et une tige creuse (220), et
d'autre part
- d'un insert (100) semi-tubulaire adapté à être bloqué en translation dans la douille (200),
**CARACTERISE PAR LE FAIT QUE** ledit insert semi-tubulaire comprend une première extrémité (110) susceptible d'être insérée dans la partie creuse de la douille (200) et une extrémité ouverte (130) susceptible de se déformer à des fins de formation d'un bulbe d'appui sur la surface dé l'autre pièce à assembler, une fois l'insert (100) bloqué en translation dans la douille (200).

2. Organe de rivetage (R) selon la revendication 1, **CARACTÉRISÉ PAR LE FAIT QUE** la douille (200) comprend un évidement (230) la traversant axialement de part en part et présentant des sections différentes.

3. Organe de rivetage (R) selon la revendication 1, **CARACTÉRISÉ PAR LE FAIT QUE** la douille (200) présente en entrée de l'extrémité tubulaire de son corps une section tronconique (231) se rétrécissant sur une section sensiblement cylindrique (232) laquelle se prolonge en une section tronconique (211) ménagée dans la tête (210) et de plus petit diamètre par rapport à la section cylindrique de façon à proposer un appui axial à l'insert, s'évase en débouchant de ladite tête (210).

4. Organe de rivetage selon la revendication 3, **CARACTÉRISÉ PAR LE FAIT QUE** l'insert (100) présente une extrémité pleine (110) et une extrémité évidée (120) :
- l'extrémité pleine (110) présente deux sections permettant leur insertion dans l'âme creuse de la douille et proposant un épaulement venant en appui sur la surface d'appui ménagée dans la douille,
- l'extrémité évidée (120) présente une section extérieure et une section creuse sensiblement tronconique.

5. Organe de rivetage (R) selon la revendication 1, **CARACTÉRISÉ PAR LE FAIT QUE** l'extrémité (120) de l'insert (100) qui vient se sertir dans la tête (210) de la douille (200) présente la forme d'une projection cylindrique coaxiale avec le reste de l'insert (100) et présente un évidement facilitant sa déformation lors de son sertissage.

6. Organe de rivetage (R) selon la revendication 1, **CARACTÉRISÉ PAR LE FAIT QUE** la longueur de la tige (220) de la douille (200) est définie pour sensiblement affleurer à l'extrémité du trou.

7. Organe de rivetage (R) selon la revendication 1, **CARACTÉRISÉ PAR LE FAIT QUE** la section de l'extrémité pleine (110) de l'insert (100) venant coopérer avec la section creuse cylindrique de la douille (200) adopte un renflement.

## Patentansprüche

1. Nietvorrichtung (R) von Teilen aus Verbundmaterialien (M1 und M2), in denen ein Durchgangsloch ausgeführt wurde, wobei die Vorrichtungen einerseits
- eine hohle Hülse (200), umfassend an einem Ende einen Kopf (210), der auf der Oberfläche eines der zusammenzubauenden Teile aufliegt, und eine hohlen Schaft (220), und
andererseits
- einen halbrohrförmigen Einsatz (100), der ausgelegt ist, um in Translation in der Hülse (200) blockiert zu werden, umfasst,
**dadurch gekennzeichnet, dass** der halbrohrförmige Einsatz ein erstes Ende (110) umfasst, das in den hohlen Teil der Hülse (200) eingeführt werden kann, und ein offenes Ende (130) das sich verformen kann, um einen Auflagewulst auf der Oberfläche des anderen zusammenzubauenden Teils zu bilden, nachdem der Einsatz (100) in Translation in der Hülse (200) blockiert ist.

2. Nietvorrichtung (R) nach Anspruch 1, **dadurch gekennzeichnet, dass** die Hülse (200) eine Aussparung (230) umfasst, die sie axial von einem Teil zum anderen durchquert und verschiedene Abschnitte aufweist.

3. Nietvorrichtung (R) nach Anspruch 1, **dadurch gekennzeichnet, dass** die Hülse (200) am Eingang des rohrförmigen Endes ihres Körpers einen kegelstumpfartigen Abschnitt (231) aufweist, der sich auf einem im Wesentlichen zylindrischen Abschnitt (232) einzieht, der sich in einem kegelstumpfartigen Abschnitt (211) verlängert, der im Kopf (210) angeordnet ist und, von kleinerem Durchmesser mit Bezug auf den zylindrischen Abschnitt, um eine axiale Auflage für den Einsatz bereitzustellen, sich aufweitet, wenn es in den Kopf (210) mündet.

4. Nietvorrichtung (R) nach Anspruch 3, **dadurch gekennzeichnet, dass** der Einsatz (100) ein volles Ende (110) und ein ausgespartes Ende (120) aufweist:
- das volle Ende (110) weist zwei Abschnitte auf, die ihre Einführung in den hohlen Kern der Hülse ermöglichen und einen Absatz bereitstellen, der auf der Auflagefläche aufliegt, die in der Hülle angebracht ist,
- das ausgesparte Ende (120) weist einen äußeren Abschnitt und einen hohlen, im Wesentlichen kegelstumpfartigen Abschnitt auf.

5. Nietvorrichtung (R) nach Anspruch 1, **dadurch gekennzeichnet, dass** das Ende (120) des Einsatzes (100), das in den Kopf (210) der Hülse (200) eingecrimpt wird, die Form eines zylindrischen Vorsprungs, koaxial mit dem Rest des Einsatzes (100), aufweist, und eine Aussparung aufweist, die ihre Verformung bei ihrem Crimpen erleichtert.

6. Nietvorrichtung (R) nach Anspruch 1, **dadurch gekennzeichnet, dass** die Länge des Schafts (220) der Hülse (200) definiert ist, um im Wesentlichen am Ende des Lochs anzustehen.

7. Nietvorrichtung (R) nach Anspruch 1, **dadurch gekennzeichnet, dass** der Abschnitt des vollen Endes (110) des Einsatzes (100) der mit dem hohlen zylindrischen Abschnitt der Hülse (200) zusammenarbeitet, eine Ausbuchtung aufweist.

## Claims

1. Riveting element (R) of parts made from composite materials (M1 and M2) wherein has been carried out a through-hole, said member is comprising on the one hand
- of a hollow bushing (200) comprising at one end a head (210) bearing on the surface of one of the parts to be assembled and a hollow rod (220), and
on the other hand
- of a semi-tubular insert (100) adapted to be translatably locked into the bushing (200),
**CHARACTERISED BY** THE FACT THAT said semi-tubular insert comprises a first end (110) able to be inserted into the hollow portion of the bushing (200) and a open end (130) able to be deformed for the purposes of forming an enlarged base bearing on the surface of the other part to be assembled, once the insert (100) is translatably locked into the bushing (200).

2. Riveting element (R) according to claim 1, **CHARACTERISED BY** THE FACT THAT the bushing (200) comprises a recess (230) passing through it axially from one side to the other and having different sections.

3. Riveting element (R) according to claim 1, **CHARACTERISED BY** THE FACT THAT the bushing (200) has at the inlet of the tubular end of its body a tapered section (231) narrowing onto a substantially cylindrical section (232) which is extended into a tapered section (211) arranged in the head (210) and of a smaller diameter in relation to the cylindrical section in such a way as to propose an axial bearing to the insert, expands while exiting from said head (210).

4. Riveting element according to claim 3, **CHARACTERISED BY** THE FACT THAT the insert (100) has a solid end (110) and a recessed end (120):
- the solid end (110) has two sections allowing them to be inserted into the hollow core of the bushing and proposing a shoulder bearing on the bearing surface arranged in the bushing,
- the recessed end (120) has an exterior section and a substantially tapered hollow section.

5. Riveting element (R) according to claim 1, **CHARACTERISED BY** THE FACT THAT the end (120) of the insert (100) that is crimped into the head (210) of the bushing (200) has the shape of a coaxial cylindrical projection with the rest of the insert (100) and has a recess facilitating its deformation during its crimping.

6. Riveting element (R) according to claim 1, **CHARACTERISED BY** THE FACT THAT the length of the rod (220) of the bushing (200) is defined to substantially be flush with the end of the hole.

7. Riveting element (R) according to claim 1, **CHARACTERISED BY** THE FACT THAT the section of the solid end (110) of the insert (100) cooperating with the cylindrical hollow section of the bushing (200) adopts a bulge.
